# EUROPEAN PATENT APPLICATION

(11) **EP 4 606 601 A1**
(43) Date of publication of application: **27.08.2025**
(21) Application number: 25152453.4
(22) Date of filing: 17.01.2025
(51) Int. Cl.: B60C 11/03, B60C 11/12, B60C 19/08

(54) **HEAVY DUTY TIRE**

(30) Priority: 14.02.2024 JP 2024020447
(71) Applicant: Sumitomo Rubber Industries, Ltd., Kobe-shi, Hyogo 651-0072 (JP)
(72) Inventor: KAGIMOTO, SHUJI, Kobe-shi, 651-0072 (JP)
(74) Representative: Manitz Finsterwald Patent- und Rechtsanwaltspartnerschaft mbB

(57) **Abstract**

A heavy duty tire 2 includes a tread 4. The tread 4 has circumferential grooves 46. Land portions 48 demarcated by the circumferential grooves 46 include main land portions 64. The circumferential groove 46 between the adjacent main land portions 64 is a circumferential narrow groove 54. The circumferential narrow groove 54 includes a body portion 66 and a wide portion 68. A maximum width W2 of the wide portion 68 is wider than a minimum width W1 of the body portion 66. Each main land portion 64 has a transverse sipe 78. The transverse sipe 78 includes a sipe body 80 and a tubular portion 82. A maximum width W4 of the tubular portion 82 is wider than a groove width W3 of the sipe body 80. The tread 4 includes a conducting portion 42. One of the main land portions 64 includes the conducting portion 42.

## Description

### BACKGROUND OF THE INVENTION

### Field of the Invention

The present invention relates to a heavy duty tire.

### Background Art

Environmental impact is being taken into consideration, and there is a strong need for tires to reduce rolling resistance.

In order to reduce rolling resistance, the application of a rubber that has low heat generation properties to a tread is being considered. The rubber that has low heat generation properties contains a large amount of silica. The electrical resistance of a tread formed from the rubber that has low heat generation properties is higher than the electrical resistance of a tread formed from a rubber that contains a large amount of carbon black.

When tires each having a tread formed from the rubber that has low heat generation properties are mounted on a vehicle, there is a concern that static electricity may accumulate in the vehicle. Therefore, for example, as described in Japanese Laid-Open Patent Publication (translation of PCT application) No. 2006-502909, a conducting bridge (hereinafter referred to as conducting portion) formed from an electrically conductive rubber is provided in a tread.

An object of the present invention is to provide a heavy duty tire that can suppress accumulation of static electricity and can achieve reduction of rolling resistance.

### SUMMARY OF THE INVENTION

A heavy duty tire according to the present invention includes: a pair of beads; a carcass extending on and between the pair of beads; a reinforcing layer located radially outward of the carcass; and a tread having an outer circumferential surface configured to come into contact with a road surface, and an inner circumferential surface in contact with the reinforcing layer. The tread has a plurality of circumferential grooves extending continuously in a circumferential direction. The plurality of circumferential grooves demarcate a plurality of land portions in the tread. The plurality of land portions include a plurality of main land portions each located between the adjacent circumferential grooves. The circumferential groove located between the adjacent main land portions is a circumferential narrow groove. The circumferential narrow groove includes a body portion and a wide portion located radially inward of the body portion. A maximum width W2 of the wide portion is wider than a minimum width W1 of the body portion. A pair of groove walls of the circumferential narrow groove come into contact with each other at the body portion when the tread comes into contact with a road surface and becomes deformed. Each of the plurality of main land portions has a transverse sipe traversing the main land portion. The transverse sipe includes a sipe body and a tubular portion located radially inward of the sipe body. A maximum width W4 of the tubular portion is wider than a groove width W3 of the sipe body. The tread includes a conducting portion connecting the outer circumferential surface and the inner circumferential surface. One of the main land portions includes the conducting portion.

According to the present invention, a heavy duty tire that can suppress accumulation of static electricity and can achieve reduction of rolling resistance, is obtained.

### BRIEF DESCRIPTION OF THE DRAWINGS

FIG. 1 is a development view showing a tread of a heavy duty tire according to one embodiment of the present invention;
FIG. 2 is an enlarged development view showing a part of FIG. 1;
FIG. 3 is a cross-sectional view of FIG. 1 taken along a line III-III;
FIG. 4 is a cross-sectional view of FIG. 1 taken along a line IV-IV;
FIG. 5 is a cross-sectional view of FIG. 2 taken along a line V-V;
FIG. 6 is a cross-sectional view of FIG. 2 taken along a line VI-VI; and
FIG. 7 is an enlarged cross-sectional view showing a part of FIG. 3.

### DETAILED DESCRIPTION

Hereinafter, the present invention will be described in detail based on a preferred embodiment with appropriate reference to the drawings.

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a crosslinked rubber is obtained by pressurizing and heating a rubber composition. The crosslinked rubber is a crosslinked product of the rubber composition. The rubber composition is a material obtained by mixing a raw material rubber component and chemicals in a kneading machine such as a Banbury mixer. The raw material rubber component is crosslinked in the crosslinked rubber, but the raw material rubber component is not crosslinked in the rubber composition. The crosslinked rubber is also referred to as vulcanized rubber, and the rubber composition is also referred to as unvulcanized rubber.

Examples of the raw material rubber component include natural rubber (NR), butadiene rubber (BR), styrene-butadiene rubber (SBR), isoprene rubber (IR), ethylenepropylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a raw material rubber component and chemicals, the amounts of the selected chemicals, etc., are determined as appropriate according to the specifications of components, such as a tread and a sidewall, for which the rubber composition is used.

In the present invention, an electrically conductive rubber means a crosslinked rubber having a volume resistivity of less than 1.0×10⁸ Ω·cm. An electrically non-conductive rubber means a crosslinked rubber having a volume resistivity of not less than 1.0×10⁸ Ω·cm. The conductivity of a rubber is controlled on the basis of the content of carbon black. In particular, in the case where the main component of a reinforcing agent is carbon black, a crosslinked rubber can be an electrically conductive rubber. In the case where the main component of a reinforcing agent is silica, a crosslinked rubber can be an electrically non-conductive rubber.

In the present invention, in the case where the rubber composition contains silica and carbon black as a reinforcing agent, if the content of silica in 100 parts by mass of the reinforcing agent exceeds 50 parts by mass, silica is the main component of the reinforcing agent, and if the content of carbon black in 100 parts by mass of the reinforcing agent exceeds 50 parts by mass, carbon black is the main component of the reinforcing agent.

In the present invention, the volume resistivity of a component formed from a crosslinked rubber, of the components included in the tire, is measured under the conditions of an applied voltage of 500 V, a temperature of 25°C, and a humidity of 50%, according to the Guarded-electrode system specified in JIS K6271. For this measurement, a sheet (thickness = 2 mm) is used.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

### [Findings on Which Present Invention Is Based]

In order to reduce rolling resistance, the application of a rubber that has low heat generation properties to a tread is being considered not only for a tire for a passenger car but also for a heavy duty tire. In this case, for example, the above-described conducting portion is provided in the tread in order to suppress accumulation of static electricity in a vehicle.

The conducting portion is formed from an electrically conductive rubber. As described above, in the case where the main component of a reinforcing agent is carbon black, a crosslinked rubber can be an electrically conductive rubber. Such a rubber has high heat generation properties. As the tire runs, the conducting portion generates heat.

The tread of a heavy duty tire is thicker than that of a tire for a passenger car. Heat is likely to accumulate in the tread of the heavy duty tire. If a conducting portion is provided in the tread of the heavy duty tire, there is a concern that the temperature around the conducting portion may rise.

Such a local increase in temperature influences the durability of the tire. If a conducting portion is provided in the tread of the heavy duty tire, there is a concern that the durability may decrease. If the heat generation properties of the conducting portion are decreased from the composition aspect, there is a possibility that a decrease in durability due to heat generation of the conducting portion can be suppressed. However, if the heat generation properties of the conducting portion are decreased from the composition aspect, the difference between the conducting portion and the rubber surrounding the conducting portion may widen in terms of physical properties, so that there is a concern that the risk of occurrence of uneven wear and chipping may increase.

If a groove is formed around the conducting portion, heat dissipation is promoted, so that there is a possibility that a decrease in durability due to heat generation of the conducting portion can be suppressed. However, the stiffness of the tread decreases. The decrease in the stiffness of the tread increases rolling resistance.

Therefore, in order to obtain a heavy duty tire that can suppress accumulation of static electricity and can achieve reduction of rolling resistance, the present inventor has conducted a thorough study for the shape of a groove formed around a conducting portion. As a result, the present inventor has found that, by forming a narrow groove, which includes a body portion having a narrow groove width and a wide portion located radially inward of the body portion and having a groove width wider than the groove width of the body portion, around the conducting portion, a decrease in durability due to heat generation of the conducting portion can be suppressed without increasing rolling resistance, and thus has completed the present invention described below.

### [Outline of Embodiment of Present Invention]

The present invention is directed to a heavy duty tire including: a pair of beads; a carcass extending on and between the pair of beads; a reinforcing layer located radially outward of the carcass; and a tread having an outer circumferential surface configured to come into contact with a road surface, and an inner circumferential surface in contact with the reinforcing layer, wherein the tread has a plurality of circumferential grooves extending continuously in a circumferential direction, the plurality of circumferential grooves demarcate a plurality of land portions in the tread, the plurality of land portions include a plurality of main land portions each located between the adjacent circumferential grooves, the circumferential groove located between the adjacent main land portions is a circumferential narrow groove, the circumferential narrow groove includes a body portion and a wide portion located radially inward of the body portion, a maximum width W2 of the wide portion is wider than a minimum width W1 of the body portion, a pair of groove walls of the circumferential narrow groove come into contact with each other at the body portion when the tread comes into contact with a road surface and becomes deformed, each of the plurality of main land portions has a transverse sipe traversing the main land portion, the transverse sipe includes a sipe body and a tubular portion located radially inward of the sipe body, a maximum width W4 of the tubular portion is wider than a groove width W3 of the sipe body, the tread includes a conducting portion connecting the outer circumferential surface and the inner circumferential surface, and one of the main land portions includes the conducting portion.

The heavy duty tire of the present invention can suppress accumulation of static electricity and can achieve reduction of rolling resistance. The mechanism by which this effect is achieved has not been clarified, but is inferred as follows.

The conducting portion connecting the outer circumferential surface and the inner circumferential surface of the tread is provided in the main land portion. The circumferential narrow groove is located between the adjacent main land portions. The circumferential narrow groove is provided around the conducting portion.

The circumferential narrow groove has the wide portion on the radially inner side of the body portion. The wide portion contributes to increasing the surface area of the circumferential narrow groove. The surface area of the circumferential narrow groove is larger than that of a circumferential narrow groove composed of only the body portion. The circumferential narrow groove can promote dissipation of heat generated in the conducting portion. A rise in the temperature around the conducting portion due to heat generation of the conducting portion is suppressed. The tire can suppress a decrease in durability due to the provision of the conducting portion in the tread.

The body portion of the circumferential narrow groove has a groove width narrower than the groove width of the wide portion. When the tread comes into contact with a road surface and becomes deformed, the pair of groove walls of the circumferential narrow groove come into contact with each other at the body portion. The two main land portions located on both sides of the circumferential narrow groove support each other, and the deformation of the tread is suppressed. The tread has stiffness higher than the stiffness of a conventional tread having no circumferential narrow groove. The circumferential narrow groove can contribute to increasing the stiffness of the tread. The tire can reduce rolling resistance.

The transverse sipe is provided in the main land portion of the tire. The transverse sipe is also located around the conducting portion. The transverse sipe has the tubular portion on the radially inner side of the sipe body. The tubular portion contributes to increasing the surface area of the transverse sipe. The sipe body of the transverse sipe can contribute to suppressing deformation of the main land portion. In the tire, by using the transverse sipe in combination with the circumferential narrow groove, heat generated in the conducting portion is effectively dissipated, so that the deformation of the tread is effectively suppressed.

The tire can suppress a decrease in durability due to heat generation of the conducting portion without increasing rolling resistance.

In the tire, even if a rubber that contains a large amount of silica and has low heat generation properties is applied to the tread in order to reduce rolling resistance, the conducting portion can sufficiently exhibit its function. The tire can suppress accumulation of static electricity. In addition, by applying the rubber that has low heat generation properties to the tread, the tire can further reduce rolling resistance.

The tire can suppress accumulation of static electricity and can achieve reduction of rolling resistance.

Preferably, the maximum width W2 of the wide portion is wider than a maximum width WX of the conducting portion. In this case, dissipation of heat generated in the conducting portion is promoted. The tire can effectively suppress a decrease in durability due to heat generation of the conducting portion.

Preferably, the maximum width W4 of the tubular portion is wider than a minimum width WN of the conducting portion. In this case, dissipation of heat generated in the conducting portion is promoted. The tire can effectively suppress a decrease in durability due to heat generation of the conducting portion.

Preferably, a land ratio defined below is not less than 75%.

Land ratio: a ratio of a total area value of ground-contact surfaces of a plurality of the land portions included in a ground-contact surface obtained when the tire that is fitted on a standardized rim and whose internal pressure is adjusted to a standardized internal pressure is brought into contact with a flat road surface with a camber angle being set to 0 degrees and with a load, which is 100% of a standardized load, being applied to the tire, to an area value of an entirety of the ground-contact surface.

In this case, the main land portions easily support each other, so that the stiffness of the tread is effectively increased. The tire can effectively reduce rolling resistance and can also improve wear resistance. Since the circumferential narrow groove effectively promotes heat dissipation, a decrease in durability due to heat generation of the conducting portion is also effectively suppressed.

Preferably, a groove bottom of the circumferential narrow groove is located radially inward of a radial center of the conducting portion. In this case, dissipation of heat generated in the conducting portion is promoted. The tire can effectively suppress a decrease in durability due to heat generation of the conducting portion.

Preferably, a groove bottom of the transverse sipe is located radially inward of the radial center of the conducting portion. In this case, dissipation of heat generated in the conducting portion is promoted. The tire can effectively suppress a decrease in durability due to heat generation of the conducting portion.

Preferably, the circumferential grooves include a plurality of the circumferential narrow grooves, the main land portion located between the adjacent circumferential narrow grooves is an inner main land portion, and the main land portion having the conducting portion is the inner main land portion. In this case, the conducting portion can effectively function as a conductive path. Since the circumferential narrow grooves are located on both sides of the inner main land portion, dissipation of heat generated in the conducting portion is effectively promoted. The tire can effectively suppress a decrease in durability due to heat generation of the conducting portion.

Preferably, the conducting portion is placed in the inner main land portion so as to be offset from an axial center of the inner main land portion. In this case, the conducting portion is placed near the circumferential narrow groove. Dissipation of heat generated in the conducting portion is promoted. The tire can effectively suppress a decrease in durability due to heat generation of the conducting portion.

Preferably, the axial center of the inner main land portion coincides with a tire equator plane. In this case, the conducting portion can effectively function as a conductive path. The tire can effectively suppress accumulation of static electricity. Furthermore, since the conducting portion is placed near the circumferential narrow groove, dissipation of heat generated in the conducting portion is effectively promoted. The tire can effectively suppress a decrease in durability due to heat generation of the conducting portion.

### [Details of Embodiment of Present Invention]

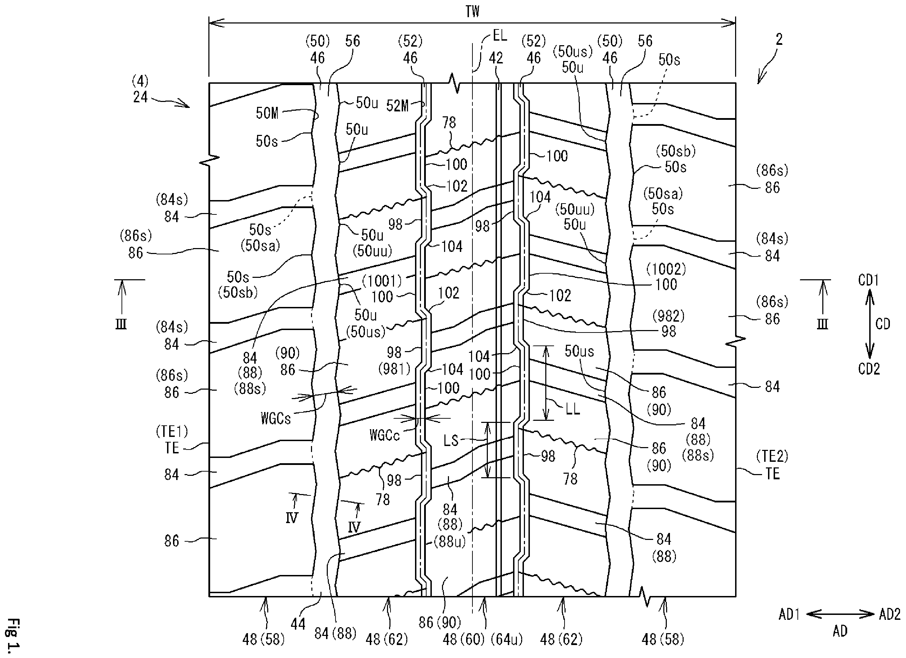

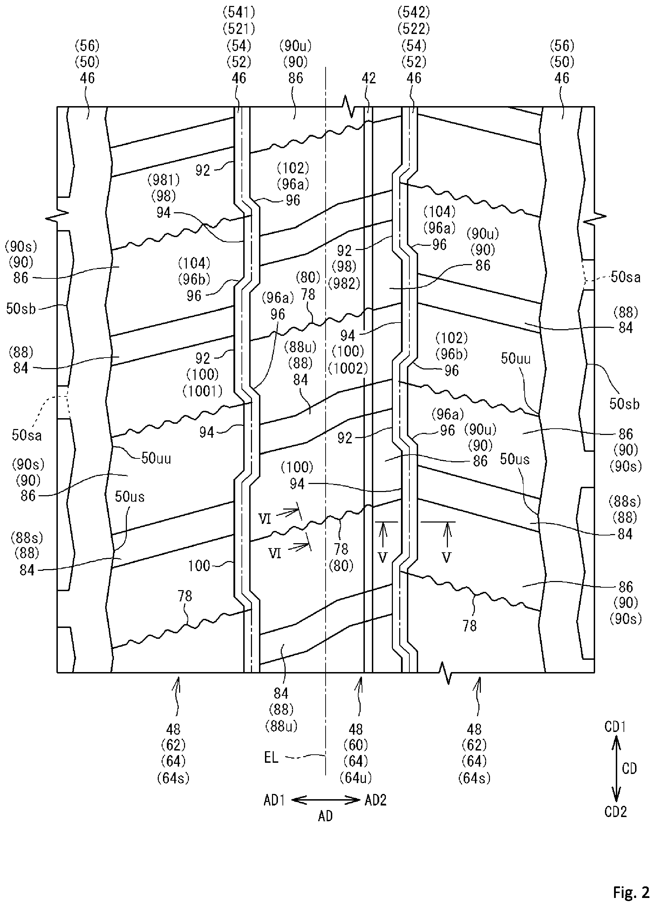

FIG. 1 is a development view showing a part of a tread 4 of a tire 2 according to one embodiment of the present invention. FIG. 2 is an enlarged development view showing a part of FIG. 1.

The tire 2 is mounted to a vehicle such as a truck and a bus. The tire 2 is a heavy duty tire.

A direction indicated by a double-headed arrow AD is the axial direction of the tire 2. The axial direction of the tire 2 means a direction parallel to the rotation axis (not shown) of the tire 2. A direction indicated by a double-headed arrow CD is the circumferential direction of the tire 2. A direction perpendicular to the surface of the drawing sheet of FIG. 1 is the radial direction of the tire 2. An alternate long and short dash line EL extending in the circumferential direction represents the equator plane of the tire 2.

A direction indicated by an arrow AD 1 is a first axial direction side of the tire 2, and a direction indicated by an arrow AD2 is a second axial direction side of the tire 2. A direction toward the equator plane EL in the axial direction is an axially inner side, and a direction toward an end of a tread surface described later is an axially outer side.

A direction indicated by an arrow CD1 is a first circumferential direction side of the tire 2, and a direction indicated by an arrow CD2 is a second circumferential direction side of the tire 2.

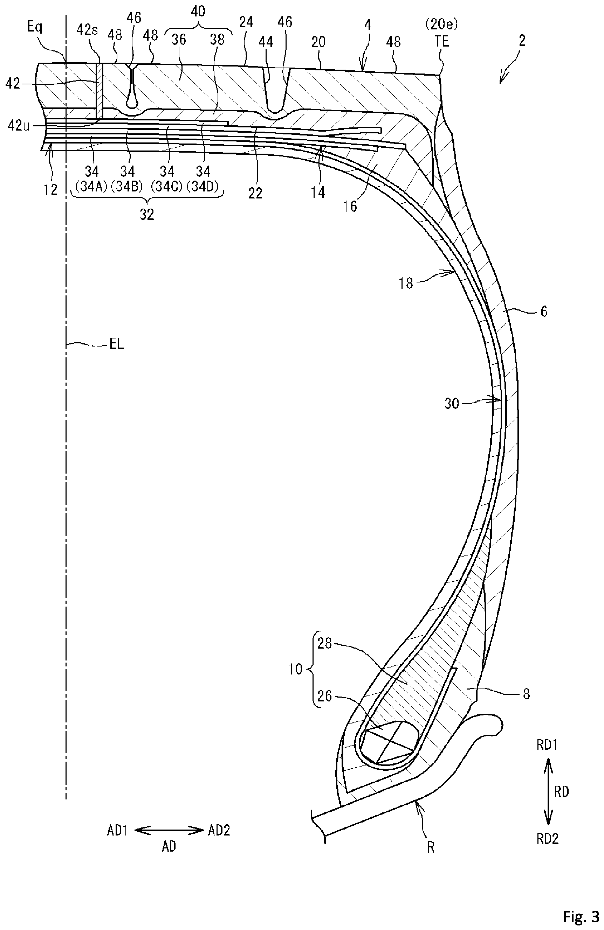

FIG. 3 shows a part of a cross-section of the tire 2 taken along a line III-III in FIG. 1. The line III-III in FIG. 1 is included in a plane including the rotation axis (not shown) of the tire 2. The cross-section shown in FIG. 3 is also referred to as meridian cross-section.

The tire 2 is fitted on a rim R. The interior of the tire 2 is filled, for example, with air to adjust the internal pressure of the tire 2. The rim R is a standardized rim, which is not described in detail.

The tire 2 includes the tread 4, a pair of sidewalls 6, a pair of chafers 8, a pair of beads 10, a carcass 12, a reinforcing layer 14, a pair of cushion layers 16, and an inner liner 18.

The tread 4 is located radially outward of the carcass 12. The tread 4 comes into contact with a road surface at an outer circumferential surface 20 thereof. The outer circumferential surface 20 of the tread 4 comes into contact with a road surface. An inner circumferential surface 22 of the tread 4 is in contact with the reinforcing layer 14. The tread 4 has the outer circumferential surface 20 which comes into contact with a road surface, and the inner circumferential surface 22 in contact with the reinforcing layer 14.

A portion, of the outer circumferential surface 20, that comes into contact with a road surface is also referred to as tread surface 24.

A position indicated by reference character Eq is the equator of the tire 2. The equator Eq is the point of intersection of the tread surface 24 and the equator plane EL. In the case where a groove described later is located on the equator plane EL, the equator is specified on the basis of a virtual tread surface obtained on the assumption that there is no groove on the equator plane EL.

Each position indicated by reference character TE is an end of the tread surface 24.

In the present invention, a position, on the outer surface of the tire, corresponding to an axially outer end of a ground-contact surface obtained when a standardized load is applied to the tire in a standardized state and the tire is brought into contact with a flat surface with a camber angle being set to 0°, is represented as the end of the tread surface.

In the tire 2, each end TE of the tread surface 24 coincides with an end 20e of the outer circumferential surface 20.

In the tread surface 24 shown in FIG. 1, one end TE of the tread surface 24 located on the left side of the equator plane EL is referred to as first end TE1. The other end TE located on the right side of the equator plane EL is referred to as second end TE2.

In FIG. 1, a length indicated by reference character TW is the width of the tread surface 24. The width TW of the tread surface 24 is the distance in the axial direction from the first end TE1 to the second end TE2 of the tread surface 24. The width TW of the tread surface 24 is represented as a length measured along the tread surface 24.

Each sidewall 6 is connected to an end of the tread 4. The sidewall 6 is located axially outward of the carcass 12. The sidewall 6 is formed from an electrically conductive crosslinked rubber. The sidewall 6 may be formed from an electrically non-conductive crosslinked rubber.

Each chafer 8 is located radially inward of the sidewall 6. The chafer 8 comes into contact with the rim R. The chafer 8 is formed from an electrically conductive crosslinked rubber.

Each bead 10 is located axially inward of the chafer 8. The bead 10 is located radially inward of the sidewall 6. The bead 10 includes a core 26 and an apex 28. Although not shown, the core 26 includes a wire made of steel and wound in the circumferential direction. The apex 28 is located radially outward of the core 26. The apex 28 is tapered. The apex 28 is formed from a hard crosslinked rubber. The bead 10 is electrically conductive.

The carcass 12 is located inward of the tread 4, the pair of sidewalls 6, and the pair of chafers 8. The carcass 12 extends on and between the pair of beads 10.

The carcass 12 includes at least one carcass ply 30. The carcass 12 of the tire 2 is composed of one carcass ply 30. The carcass ply 30 is turned up from the inner side toward the outer side in the axial direction at each bead 10. Each turned-up end of the carcass ply 30 is located radially inward of the outer end of the chafer 8.

The carcass ply 30 includes a large number of carcass cords aligned with each other, which are not shown. These carcass cords are covered with a topping rubber and intersect the equator plane EL. The carcass 12 has a radial structure. The carcass cords are steel cords. The topping rubber is an electrically conductive crosslinked rubber. The carcass ply 30, that is, the carcass 12, is electrically conductive.

The reinforcing layer 14 is located radially outward of the carcass 12. The reinforcing layer 14 is located between the tread 4 and the carcass 12 in the radial direction. The reinforcing layer 14 of the tire 2 is stacked on the carcass 12. The reinforcing layer 14 is covered with the tread 4.

The reinforcing layer 14 includes a belt 32. The reinforcing layer 14 of the tire 2 is the belt 32.

The belt 32 includes a plurality of belt plies 34 aligned in the radial direction. The belt 32 of the tire 2 is composed of four belt plies 34. The four belt plies 34 are a first belt ply 34A, a second belt ply 34B, a third belt ply 34C, and a fourth belt ply 34D. The first belt ply 34A is located on the innermost side in the radial direction. The second belt ply 34B has a widest width, and the fourth belt ply 34D located on the outermost side in the radial direction has a narrowest width.

Each belt ply 34 includes a large number of belt cords aligned with each other, which are not shown. These belt cords are covered with a topping rubber and are inclined with respect to the equator plane EL. The belt cords are steel cords. The topping rubber is an electrically conductive crosslinked rubber. The belt ply 34, that is, the belt 32, is electrically conductive.

The reinforcing layer 14 may further include a band including a helically wound band cord. In this case, the band cord included in the band extends substantially in the circumferential direction.

Each cushion layer 16 is located between the reinforcing layer 14 and the carcass 12 at an end of the reinforcing layer 14 (specifically, the belt described later). The cushion layer 16 is formed from a soft crosslinked rubber. The cushion layer 16 is electrically conductive.

The inner liner 18 is located inward of the carcass 12. The inner liner 18 forms an inner surface of the tire 2. The inner liner 18 is formed from a crosslinked rubber that has an excellent air blocking property. The inner liner 18 maintains the internal pressure of the tire 2.

The tread 4 of the tire 2 includes a cap portion 36 and a base portion 38.

The cap portion 36 includes the outer circumferential surface 20 of the tread 4. The cap portion 36 is formed from a crosslinked rubber for which wear resistance and grip performance are taken into consideration. The cap portion 36 may be formed from a crosslinked rubber for which not only wear resistance and grip performance but also low heat generation properties are taken into consideration. In this case, the cap portion 36 may be formed from an electrically non-conductive rubber.

The base portion 38 is located radially inward of the cap portion 36. The entire base portion 38 is covered with the cap portion 36. The base portion 38 is formed from a crosslinked rubber for which low heat generation properties are taken into consideration. The base portion 38 may be formed from an electrically non-conductive rubber.

The portion composed of the cap portion 36 and the base portion 38 is a main body 40 of the tread 4. The tread 4 further includes a conducting portion 42 which penetrates the main body 40. The conducting portion 42 is formed from an electrically conductive crosslinked rubber.

The conducting portion 42 connects the outer circumferential surface 20 and the inner circumferential surface 22 of the tread 4. An outer end surface 42s of the conducting portion 42 forms a part of the outer circumferential surface 20 of the tread 4. In other words, the outer end surface 42s is included in the outer circumferential surface 20. The outer end surface 42s comes into contact with a road surface. An inner end surface 42u of the conducting portion 42 forms a part of the inner circumferential surface 22 of the tread 4. In other words, the inner end surface 42u is included in the inner circumferential surface 22. The inner end surface 42u is in contact with the reinforcing layer 14.

The conducting portion 42 of the tire 2 extends continuously in the circumferential direction. Although not shown, the conducting portion 42 may be formed by arranging a plurality of conducting elements at predetermined intervals in the circumferential direction. In this case, the conducting portion 42 extends intermittently in the circumferential direction.

As shown in FIG. 1, grooves 44 are formed on the tread 4 of the tire 2. The grooves 44 form a tread pattern. A tread pattern of the present invention will be described with the tread pattern shown in FIG. 1 as an example.

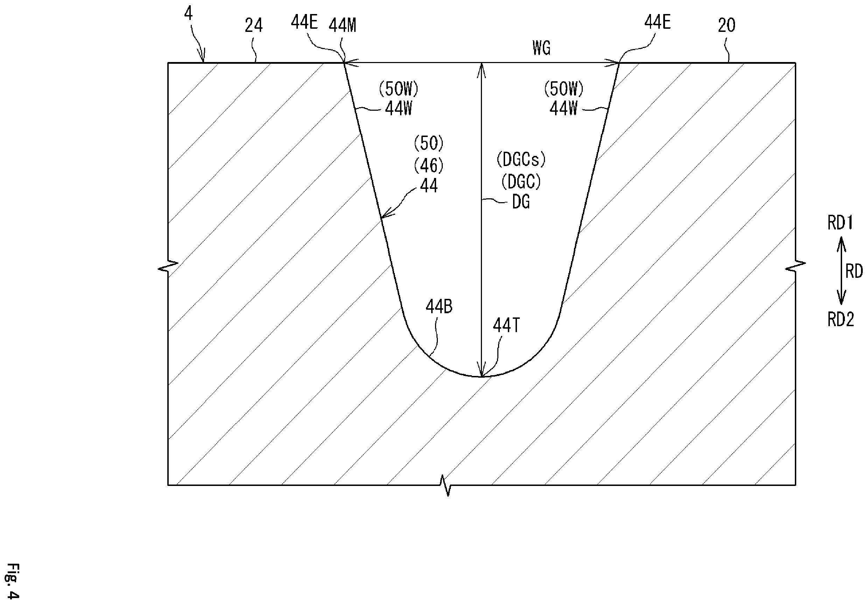

FIG. 4 is a cross-sectional view of FIG. 1 taken along a line IV-IV. FIG. 4 shows a cross-section of the groove 44, specifically, a shoulder circumferential groove described later. The main configuration of the groove 44 will be described with reference to FIG. 4.

In the present invention, the cross-section of the groove 44 is represented as a cross-section along a plane perpendicular to the length direction of the groove 44.

The groove 44 has a pair of groove walls 44W which extend between a groove opening 44M and a groove bottom 44T. A first groove wall 44W and a second groove wall 44W which are the pair of groove walls 44W face each other. The groove width of the groove 44 is represented as the distance between the first groove wall 44W and the second groove wall 44W facing each other, that is, the inter-groove wall distance.

In FIG. 4, a length indicated by a double-headed arrow WG is the groove width of the groove 44 at the groove opening 44M. The groove width WG is represented as the shortest distance between a pair of edges 44E forming the groove opening 44M. In the case where a portion of the groove 44 at the groove opening 44M is processed in a tapered manner, the groove width at the groove opening 44M of the groove 44 is represented on the basis of virtual edges obtained on the assumption that the portion of the groove 44 at the groove opening 44M is not processed in a tapered manner.

A length indicated by a double-headed arrow DG is the groove depth of the groove 44. The groove depth DG of the groove 44 is represented as the shortest distance from a line segment connecting the left and right edges 44E to the groove bottom 44T of the groove 44.

The position, the groove width WG, and the groove depth DG of the groove 44 are determined as appropriate according to the specifications of the tire 2.

The groove bottom 44T is the deepest position in the cross-section of the groove 44. The distance from the line segment connecting the left and right edges 44E forming the groove opening 44M, to the groove 44, is measured along a normal line of this line segment. A position at which the distance from the line segment to the groove 44 is the largest is the groove bottom 44T.

A portion, of the groove 44, including the groove bottom 44T is also referred to as bottom surface 44B. In this case, a portion between the bottom surface 44B and each edge 44E is also referred to as wall surface.

The bottom surface 44B shown in FIG. 4 is a curved surface. The bottom surface 44B may be composed of a flat surface. In this case, the width center of the flat surface constituting the bottom surface 44B is used as the groove bottom 44T.

The grooves 44 each having a groove width WG of less than 1.0 mm at the groove opening 44M are referred to as sipes. The grooves 44 other than sipes are also referred to as ordinary grooves, and each have a groove width WG of not less than 1.0 mm at the groove opening 44M.

A sipe may include a portion (hereinafter referred to as ordinary groove equivalent portion) having a groove width of not less than 1.0 mm, between the groove opening 44M and the groove bottom 44T thereof. In this case, the sipe becomes an ordinary groove when the tread 4 becomes worn and the ordinary groove equivalent portion is exposed.

An ordinary groove may include a portion (hereinafter referred to as sipe equivalent portion) having a groove width of less than 1.0 mm, between the groove opening 44M and the groove bottom 44T thereof. In this case, the ordinary groove becomes a sipe when the tread 4 becomes worn and the sipe equivalent portion is exposed.

An ordinary groove that has a narrow groove width and whose pair of groove walls 44W can come into contact with each other when the tread 4 comes into contact with a road surface and becomes deformed, is also referred to as narrow groove. The narrow groove has a pair of groove walls 44W which come into contact with each other when the tread 4 comes into contact with a road surface and becomes deformed. On the other hand, an ordinary groove that has a wide groove width and whose pair of groove walls 44W do not come into contact with each other even when the tread 4 comes into contact with a road surface and becomes deformed, is also referred to as wide groove. The wide groove has a pair of groove walls 44W which do not come into contact with each other even when the tread 4 comes into contact with a road surface and becomes deformed.

In FIG. 4, a length indicated by a double-headed arrow DGC is the groove depth of a circumferential groove described later. The groove depth DGC of the circumferential groove is, for example, not less than 10 mm and not greater than 21 mm. From the viewpoint that the tire 2 can exhibit excellent wet performance, the groove depth DGC is preferably not less than 13 mm and not greater than 18 mm.

As shown in FIG. 1, a circumferential groove 46 is formed on the tread 4 of the tire 2 so as to extend continuously in the circumferential direction. On the tread 4, a plurality of circumferential grooves 46 are formed, so that a plurality of land portions 48 are formed therein so as to be aligned in the axial direction. In other words, the tread 4 has the plurality of circumferential grooves 46. The plurality of circumferential grooves 46 demarcate the plurality of land portions 48 in the tread 4.

In the present invention, among the plurality of circumferential grooves formed on the tread, the circumferential groove located on each outermost side in the axial direction is a shoulder circumferential groove. The circumferential groove located on the equator plane is a center circumferential groove. In the case where no circumferential groove is provided on the equator plane, the circumferential groove closest to the equator plane is a center circumferential groove. In the case where a circumferential groove is located between the center circumferential groove and the shoulder circumferential groove, the circumferential groove located between the center circumferential groove and the shoulder circumferential groove is referred to as middle circumferential groove.

The tread 4 shown in FIG. 1 has four circumferential grooves 46 aligned in the axial direction. Among the four circumferential grooves 46, a circumferential groove 50 located on each outermost side in the axial direction is a shoulder circumferential groove. A circumferential groove 52 closest to the equator plane EL is a center circumferential groove. The tread 4 has a pair of center circumferential grooves 52 and a pair of shoulder circumferential grooves 50 located axially outward of the center circumferential grooves 52.

In FIG. 1, a length indicated by a double-headed arrow WGCc is the groove width at a groove opening 52M of the center circumferential groove 52. A length indicated by a double-headed arrow WGCs is the groove width at a groove opening 50M of the shoulder circumferential groove 50.

The ratio (WGCc/TW) of the groove width WGCc of the center circumferential groove 52 to the width TW of the tread surface 24 is not greater than 2.0%.

As shown in FIG. 1, the groove width WGCs of the shoulder circumferential groove 50 is wider than the groove width WGCc of the center circumferential groove 52. The ratio (WGCs/TW) of the groove width WGCs of the shoulder circumferential groove 50 to the width TW of the tread surface 24 exceeds 2.0%. Specifically, the ratio (WGCs/TW) is preferably not less than 4.0% and not greater than 10%.

As shown in FIG. 1, each shoulder circumferential groove 50 of the tire 2 includes outer peaks 50s closer to the end TE of the tread surface 24 and inner peaks 50u closer to the equator plane EL. The outer peaks 50s and the inner peaks 50u are arranged alternately in the circumferential direction. The shoulder circumferential groove 50 extends in the circumferential direction while alternately passing through the outer peaks 50s and the inner peaks 50u. The shoulder circumferential groove 50 extends in a zigzag manner. The shoulder circumferential groove 50 may extend straight in the circumferential direction.

The shoulder circumferential groove 50 has a wide groove width. In the shoulder circumferential groove 50, a pair of groove walls 50W do not come into contact with each other even when the tread 4 comes into contact with a road surface and becomes deformed. The shoulder circumferential groove 50 is a wide groove extending continuously in the circumferential direction, that is, a circumferential wide groove 56.

In the present invention, among the plurality of land portions formed in the tread, the land portion located on each outermost side in the axial direction is a shoulder land portion. The land portion located on the equator plane is a center land portion. In the case where no land portion is provided on the equator plane, the land portion closest to the equator plane is a center land portion. In the case where a land portion is located between the center land portion and the shoulder land portion, the land portion between the center land portion and the shoulder land portion is referred to as middle land portion.

The tread 4 shown in FIG. 1 has five land portions 48 aligned in the axial direction. Among the five land portions 48, a land portion 58 located on each outermost side in the axial direction is a shoulder land portion. A land portion 60 located on the equator plane EL is a center land portion. A land portion 62 located between the center land portion 60 and the shoulder land portion 58 is a middle land portion. The tread 4 includes a center land portion 60, a pair of middle land portions 62 located axially outward of the center land portion 60, and a pair of shoulder land portions 58 located axially outward of the middle land portions 62.

Although not described in detail, the width of each land portion 48 is determined as appropriate according to the specifications of the tire 2.

In the present invention, among the plurality of land portions formed in the tread, a land portion between adjacent circumferential grooves is a main land portion.

As shown in FIG. 2, the center land portion 60 of the tire 2 is located between the two center circumferential grooves 52. Each middle land portion 62 is located between the center circumferential groove 52 and the shoulder circumferential groove 50. Each of the center land portion 60 and the middle land portions 62 is a land portion 48 between adjacent circumferential grooves 46, that is, a main land portion 64. The five land portions 48 formed in the tread 4 include three main land portions 64 each located between the adjacent circumferential grooves 46.

In the tread 4 of the tire 2, the plurality of land portions 48 are formed so as to be aligned in the axial direction, and the plurality of land portions 48 include a plurality of main land portions 64 each located between the adjacent circumferential grooves 46.

In the present invention, among the plurality of main land portions, a main land portion located on each outermost side in the axial direction is an outer main land portion. A main land portion located between the two outer main land portions is an inner main land portion.

As described above, the center land portion 60 and the middle land portions 62 are the main land portions 64. Among the center land portion 60 and the middle land portions 62 which are the main land portions 64, the main land portion 64 located on each outermost side in the axial direction is the middle land portion 62. Each middle land portion 62 is an outer main land portion 64s. The center land portion 60 is located between the two middle land portions 62 which are the outer main land portions 64s. The center land portion 60 is an inner main land portion 64u.

The tread 4 of the tire 2 has the three main land portions 64. The three main land portions 64 include the inner main land portion 64u and the pair of outer main land portions 64s located axially outward of the inner main land portion 64u. The inner main land portion 64u is the main land portion 64 located at the center among the three main land portions 64 aligned in the axial direction. In particular, the inner main land portion 64u of the tire 2 is located on the equator plane EL.

Each shoulder land portion 58 is located axially outward of the shoulder circumferential groove 50 located on the outermost side in the axial direction among the plurality of circumferential grooves 46 of the tread 4. The shoulder land portion 58 includes the end TE of the tread surface 24. The shoulder land portion 58 is not a land portion 48 located between adjacent circumferential grooves 46. The shoulder land portion 58 is not a main land portion 64.

The plurality of land portions 48 formed in the tread 4 of the tire 2 include the two shoulder land portions 58 each located on the outermost side in the axial direction, and the plurality of main land portions 64 located between the two shoulder land portions 58.

In the present invention, the circumferential groove located between the adjacent main land portions is a circumferential narrow groove.

Each center circumferential groove 52 is located between the center land portion 60 and the middle land portion 62. As described above, the center land portion 60 and the middle land portions 62 are the main land portions 64. The center circumferential groove 52 is located between the adjacent main land portions 64. The center circumferential groove 52 is a circumferential narrow groove 54. Each circumferential narrow groove 54 of the tire 2 is located between the outer main land portion 64s and the inner main land portion 64u.

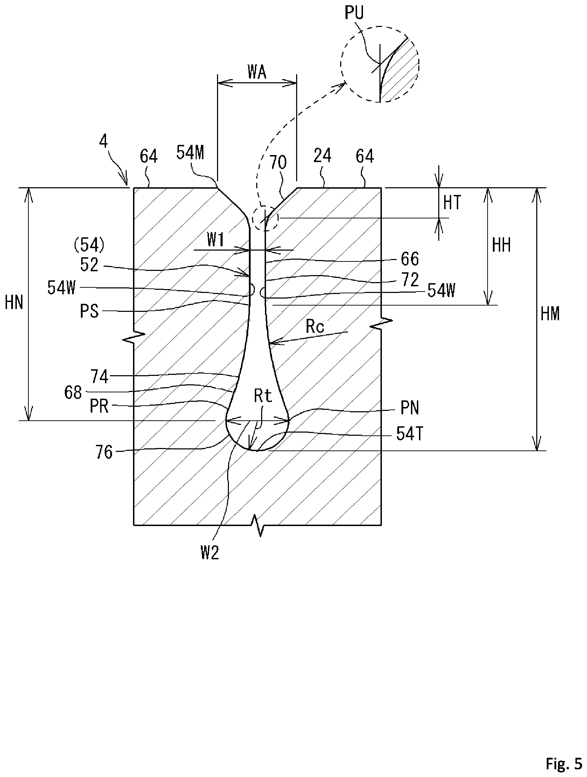

FIG. 5 is a cross-sectional view of FIG. 2 taken along a line V-V. FIG. 5 shows a cross-section of the center circumferential groove 52, that is, the circumferential narrow groove 54.

The circumferential narrow groove 54 includes a body portion 66 and a wide portion 68. The body portion 66 includes a groove opening 54M of the circumferential narrow groove 54. The wide portion 68 is located radially inward of the body portion 66. The wide portion 68 includes a groove bottom 54T of the circumferential narrow groove 54.

The body portion 66 includes a tapered portion 70 and a body portion main body 72. A portion of the circumferential narrow groove 54 at the groove opening 54M is processed in a tapered manner.

The tapered portion 70 includes the groove opening 54M of the circumferential narrow groove 54. The tapered portion 70 is tapered inward from the groove opening 54M. The contour of each groove wall of the tapered portion 70 shown in FIG. 5 is represented by a straight line. This contour may be represented by a curve.

In FIG. 5, a length indicated by a double-headed arrow WA is the groove width at the groove opening 54M of the tapered portion 70. The groove width WA of the tapered portion 70 is preferably not less than 0.15 times and not greater than 0.45 times the groove width WGCs of the shoulder circumferential groove 50, in other words, the circumferential wide groove 56.

The body portion main body 72 is located radially inward of the tapered portion 70. The body portion main body 72 is connected to the tapered portion 70. The body portion main body 72 extends straight in the depth direction of the circumferential narrow groove 54. In the cross-section shown in FIG. 5, the contour of each groove wall of the body portion main body 72 is represented by a straight line. In FIG. 5, a length indicated by a double-headed arrow W1 is the minimum width of the body portion main body 72. The body portion main body 72 has a groove width W1 which is uniform in the depth direction of the circumferential narrow groove 54.

In the case where the portion of the groove 44 at the groove opening 44M is processed in a tapered manner as described above, the groove width at the groove opening 44M of the groove 44 is represented on the basis of a virtual edge obtained on the assumption that this portion is not processed in a tapered manner. The groove width at the groove opening 54M of the circumferential narrow groove 54 is represented as the groove width W1 of the body portion main body 72.

The tapered portion 70 is wider than the body portion main body 72. The minimum width W1 of the body portion main body 72 is the minimum width of the body portion 66. The body portion 66 has a minimum width W1.

In FIG. 5, a position indicated by reference character PU is the boundary between the tapered portion 70 and the body portion main body 72. The boundary PU is represented as the point of intersection of a groove wall contour line of the tapered portion 70 and a groove wall contour line of the body portion main body 72. As shown in FIG. 5, in the case where the boundary portion between the tapered portion 70 and the body portion main body 72 is rounded, the boundary PU is represented as the point of intersection of an extension line of the groove wall contour line of the tapered portion 70 and an extension line of the groove wall contour of the body portion main body 72.

The wide portion 68 is located radially inward of the body portion 66. The wide portion 68 is connected to the body portion 66. The wide portion 68 has a groove width wider than the minimum width W1 of the body portion 66.

In FIG. 5, a length indicated by a double-headed arrow W2 is the maximum width of the wide portion 68. A position indicated by reference character PN is a position at which the wide portion 68 has the maximum width W2 (hereinafter referred to as maximum width position PN). A portion of the circumferential narrow groove 54 except for the body portion 66, that is, the wide portion 68 of the circumferential narrow groove 54, is tapered outward from the maximum width position PN, and is tapered inward from the maximum width position PN.

The wide portion 68 includes an inflection portion 74 and a bottom portion 76. The inflection portion 74 is located radially inward of the body portion main body 72. The bottom portion 76 is located radially inward of the inflection portion 74.

The inflection portion 74 connects the body portion main body 72 and the bottom portion 76. The groove width of the inflection portion 74 gradually increases from the body portion main body 72 side toward the bottom portion 76 side. The inflection portion 74 is curved so as to be recessed inward from the outer side thereof. In the tire 2, the contour of the inflection portion 74 is represented by an arc. In FIG. 5, an arrow Rc indicates the radius of the arc representing the contour of the inflection portion 74.

The bottom portion 76 includes the groove bottom 54T. The bottom portion 76 has a rounded contour. The bottom portion 76 is curved so as to bulge outward from the inner side thereof. The contour of the bottom portion 76 of the circumferential narrow groove 54 shown in FIG. 5 is represented by an arc. In FIG. 5, an arrow Rt indicates the radius of the arc representing the contour of the bottom portion 76. The radius Rt of this arc is, for example, not less than 1.5 mm and not greater than 3.5 mm.

A position indicated by reference character PR is the boundary between the inflection portion 74 and the bottom portion 76. The arc representing the contour of the inflection portion 74 and the arc representing the contour of the bottom portion 76 are tangent to each other at the boundary PR.

As shown in FIG. 5, the maximum width position PN of the wide portion 68 is included in the bottom portion 76. In other words, the maximum width position PN is located radially inward of the boundary PR. The maximum width W2 of the wide portion 68 is equal to twice the radius Rt of the arc representing the contour of the bottom portion 76.

In the tire 2, the radius Rc of the arc representing the contour of the inflection portion 74 is larger than the radius Rt of the arc representing the contour of the bottom portion 76. Accordingly, the circumferential narrow groove 54 can sufficiently exhibit its function. From this viewpoint, the ratio Rc/Rt of the radius Rc of the arc representing the contour of the inflection portion 74 to the radius Rt of the arc representing the contour of the bottom portion 76 is preferably not less than 1.5 and not greater than 20.0.

In FIG. 5, a position indicated by reference character PS is the boundary between the body portion 66 and the wide portion 68.

In the present invention, the position at which a groove wall contour line of the wide portion 68 converges with the groove wall contour line of the body portion main body 72 (in the circumferential narrow groove 54 shown in FIG. 5, the boundary between the straight line representing the contour of the body portion main body 72 and the arc representing the contour of the inflection portion 74) is the boundary PS between the body portion 66 and the wide portion 68. In the case where the boundary PS cannot be specified due to the difference in contour, the position at which the groove width from the position at which the body portion 66 has the minimum width W1 to the maximum width position PN of the wide portion 68 is 1.1 times the minimum width W1 is represented as the boundary PS between the body portion 66 and the wide portion 68.

The tapered portion 70 does not have to be provided in the circumferential narrow groove 54. In other words, the body portion 66 may be composed of only the body portion main body 72. In this case, a cross-sectional shape of the circumferential narrow groove 54 is shaped such that each groove wall of the body portion main body 72 shown in FIG. 5 extends outward and the point of intersection of an extension line of this groove wall and an extension line of the tread surface 24 is the groove opening of the body portion main body 72, that is, the groove opening 54M of the circumferential narrow groove 54.

From the viewpoint that the tire 2 can effectively suppress concentration of strain on the edges of the main land portions 64 while ensuring the groove volume of the circumferential narrow groove 54, it is preferable that the tapered portion 70 is provided in the circumferential narrow groove 54 as shown in FIG. 5.

In FIG. 5, a length indicated by a double-headed arrow HM is the groove depth of the circumferential narrow groove 54. A length indicated by a double-headed arrow HH is the groove depth of the body portion 66. A length indicated by a double-headed arrow HT is the groove depth of the tapered portion 70.

The groove depth HM of the circumferential narrow groove 54 of the tire 2 is substantially equal to a groove depth DGCs of the shoulder circumferential groove 50, that is, the circumferential wide groove 56. Specifically, the groove depth HM of the circumferential narrow groove 54 is not less than 0.95 times and not greater than 1.05 times the groove depth DGCs of the circumferential wide groove 56.

From the viewpoint that the tire 2 can effectively suppress concentration of strain on the edges of the main land portions 64 while ensuring the groove volume of the circumferential narrow groove 54, the ratio (HT/HM) of the groove depth HT of the tapered portion 70 to the groove depth HM of the circumferential narrow groove 54 is preferably not less than 0.12 and not greater than 0.14.

For example, as shown in FIG. 2, each of the plurality of main land portions 64 formed in the tread 4 has a plurality of transverse sipes 78. The plurality of transverse sipes 78 are aligned in the circumferential direction. Each transverse sipe 78 traverses the main land portion 64. The transverse sipe 78 connects the two circumferential grooves 46.

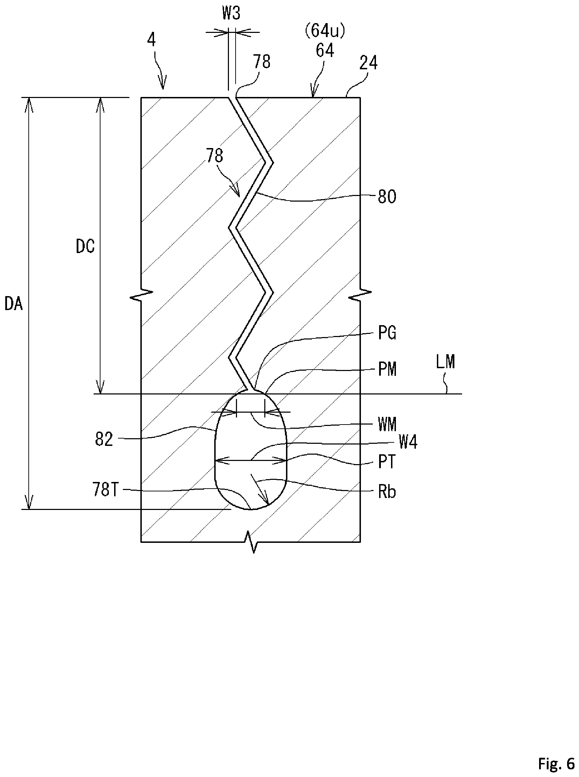

FIG. 6 is a cross-sectional view of FIG. 2 taken along a line VI-VI. FIG. 6 shows a cross-section of the transverse sipe 78. FIG. 6 shows a cross-section of the transverse sipe 78 along a plane perpendicular to the length direction of the transverse sipe 78.

FIG. 6 shows a cross-section of the transverse sipe 78 provided on the center land portion 60, in other words, the inner main land portion 64u. In the tire 2, the transverse sipes 78 are also provided on the middle land portions 62, in other words, the outer main land portions 64s. A cross-sectional shape of each transverse sipe 78 of each outer main land portion 64s is the same as that of each transverse sipe 78 of the inner main land portion 64u. The description of the cross-section shape of each transverse sipe 78 of each outer main land portion 64s is omitted.

The transverse sipe 78 has a sipe body 80 and a tubular portion 82. The sipe body 80 includes a groove opening 78M of the transverse sipe 78. The tubular portion 82 includes a groove bottom 78T of the transverse sipe 78.

As shown in FIG. 2, the sipe body 80 extends in a zigzag manner in the length direction of the transverse sipe 78. As shown in FIG. 6, the sipe body 80 extends in a zigzag manner in the depth direction of the transverse sipe 78. The sipe body 80 is a three-dimensional sipe. Although not shown, the sipe body 80 may be a two-dimensional sipe spreading like a flat plate. In this case, the sipe body 80 extends straight in the length direction and extends straight in the depth direction.

The tubular portion 82 is located radially inward of the sipe body 80. The tubular portion 82 extends in the length direction of the transverse sipe 78.

In FIG. 6, a solid line LM is a boundary line between the sipe body 80 and the tubular portion 82. A length indicated by a double-headed arrow WM is the groove width of the transverse sipe 78 measured along the boundary line LM. The boundary line LM is set at the position at which the groove width WM is 1.0 mm.

The transverse sipe 78 has a groove width W3 of less than 1.0 mm at the groove opening 78M thereof.

A portion outside the boundary line LM, that is, the sipe body 80, has a groove width W3 which is uniform in the depth direction of the transverse sipe 78. The groove width W3 of the sipe body 80 is less than 1.0 mm. The sipe body 80 is a sipe.

The groove width of a portion inside the boundary line LM, that is, the tubular portion 82, is not less than 1.0 mm. The groove width of the tubular portion 82 is wider than the groove width W3 of the sipe body 80.

The tubular portion 82 extends inward from the position of the boundary line LM. In FIG. 6, a length indicated by a double-headed arrow W4 is the maximum width of the tubular portion 82. A position indicated by reference character PT is the position at which the tubular portion 82 has the maximum width W4. The tubular portion 82 is tapered outward from a portion where the tubular portion 82 has the maximum width W4. The tubular portion 82 is tapered inward from the portion where the tubular portion 82 has the maximum width W4.

The maximum width W4 of the tubular portion 82 is equal to the maximum width W2 of the wide portion 68 of the circumferential narrow groove 54, or narrower than the maximum width W2. The maximum width W4 is equal to the minimum width W1 of the body portion 66 of the circumferential narrow groove 54, or wider than the minimum width W1.

A cross-sectional shape of the tubular portion 82 may be circular or elliptical. This cross-sectional shape may be a shape in which the portion where tubular portion 82 has the maximum width W4 is represented by a straight line and the sipe body 80 side and the groove bottom 78T side of the portion represented by the straight line are represented by arcs (hereinafter, this shape is also referred to as track shape).

In FIG. 6, a length indicated by a double-headed arrow DA is the groove depth of the transverse sipe 78. A length indicated by a double-headed arrow DC is the groove depth of the sipe body 80.

In the tire 2, the groove depth DA of the transverse sipe 78 is equal to the groove depth DGC of the circumferential groove 46, specifically, the groove depth DGCs of the circumferential wide groove 56, or the transverse sipe 78 is shallower than the circumferential wide groove 56. Specifically, the groove depth DA of the transverse sipe 78 is not less than 0.80 times and not greater than 1.00 times the groove depth DGCs of the circumferential wide groove 56.

As described above, the groove depth HM of the circumferential narrow groove 54 is substantially equal to the groove depth DGCs of the circumferential wide groove 56. The groove depth DA of the transverse sipe 78 is equal to the groove depth HM of the circumferential narrow groove 54, or the transverse sipe 78 is shallower than the circumferential narrow groove 54.

In the tire 2, the center land portion 60 has the above-described conducting portion 42. The conducting portion 42 may be provided in the middle land portion 62. The conducting portion 42 may be provided in each of the center land portion 60 and the middle land portions 62.

As described above, the center land portion 60 and the middle land portions 62 are the main land portions 64. In the tire 2, among the plurality of main land portions 64 formed in the tread 4, any one main land portion 64 includes the conducting portion 42.

As shown in FIG. 3, the rim R comes into contact with the chafer 8. The chafer 8 is in contact with the carcass 12. The carcass 12 is in contact with the belt 32. The belt 32 is in contact with the conducting portion 42. The conducting portion 42 comes into contact with a road surface. As described above, the chafer 8, the carcass 12, the belt 32, and the conducting portion 42 are electrically conductive. The chafer 8, the carcass 12, the belt 32, and the conducting portion 42 form a conductive path connecting the rim R and a road surface. Static electricity generated in the vehicle and the tire 2 flows from the rim R to a road surface through the conductive path. The tire 2 can suppress accumulation of static electricity.

The conductive path for which the present invention is applicable is not limited to the conductive path shown in FIG. 3 as long as the conductive path is a conductive path passing through the conducting portion 42 formed in the tread 4. The conductive path shown in FIG. 3 is an example of the conductive path for which the present invention is applicable.

As described above, the conducting portion 42 is an electrically conductive crosslinked rubber. As the tire 2 runs, the conducting portion 42 generates heat. Although not described in detail, the tread 4 of the tire 2 is thicker than that of a tire for a passenger car. Heat is likely to accumulate in the tread 4. When the conducting portion 42 generates heat, the temperature around the conducting portion 42 rises, and there is a concern that durability may decrease depending on the degree of the rise.

However, the conducting portion 42 of the tire 2 is provided in the main land portion 64. As described above, each circumferential narrow groove 54 is provided between the adjacent main land portions 64. The circumferential narrow groove 54 is located adjacent to the main land portion 64 in which the conducting portion 42 is provided. The circumferential narrow groove 54 is provided around the conducting portion 42.

The circumferential narrow groove 54 has the wide portion 68 on the radially inner side of the body portion 66. As described above, the maximum width W2 of the wide portion 68 is wider than the minimum width W1 of the body portion 66. The wide portion 68 contributes to increasing the surface area of the circumferential narrow groove 54. The surface area of the circumferential narrow groove 54 is larger than that of a circumferential narrow groove composed of only the body portion 66. The circumferential narrow groove 54 can promote dissipation of heat generated in the conducting portion 42. A rise in the temperature around the conducting portion 42 due to heat generation of the conducting portion 42 is suppressed. The tire 2 can suppress a decrease in durability due to the provision of the conducting portion 42 in the tread 4.

As described above, each circumferential narrow groove 54 of the tire 2 has the body portion 66 having the minimum width W1. When the tread surface 24 comes into contact with a road surface, the tread 4 becomes deformed. In the tire 2, the minimum width W1 is adjusted such that opposing groove walls 54W of the circumferential narrow groove 54 come into contact with each other at the body portion 66 due to the deformation of the tread 4. That is, when the tread 4 comes into contact with a road surface and becomes deformed, the pair of groove walls 54W of the circumferential narrow groove 54 come into contact with each other at the body portion 66. Accordingly, the two main land portions 64 located on both sides of the circumferential narrow groove 54 support each other, and the deformation of the tread 4 is suppressed. The tread 4 has stiffness higher than the stiffness of a conventional tread having no circumferential narrow groove 54. The circumferential narrow groove 54 can contribute to increasing the stiffness of the tread 4. The tire 2 can reduce rolling resistance.

As described above, each of the plurality of main land portions 64 formed in the tread 4 has the plurality of transverse sipes 78. In the tire 2, not only the circumferential narrow grooves 54 but also the transverse sipes 78 are provided around the conducting portion 42.

In each transverse sipe 78, the maximum width W4 of the tubular portion 82 is wider than the groove width W3 of the sipe body 80. The tubular portion 82 contributes to increasing the surface area of the transverse sipe 78. The surface area of the transverse sipe 78 is larger than that of a transverse sipe composed of only the sipe body 80. The tubular portion 82 can contribute to dissipation of heat generated in the conducting portion 42.

In the sipe body 80, the groove walls come into contact and support each other. The sipe body 80 can contribute to suppressing deformation of the main land portion 64.

In the tire 2, by using the transverse sipes 78 in combination with the above-described circumferential narrow grooves 54, heat generated in the conducting portion 42 is effectively dissipated, so that the deformation of the tread 4 is effectively suppressed.

The tire 2 can suppress a decrease in durability due to heat generation of the conducting portion 42 without increasing rolling resistance.

In the tire 2, even if a rubber that contains a large amount of silica and has low heat generation properties is applied to the tread 4 in order to reduce rolling resistance, the conducting portion 42 can sufficiently exhibit its function. The tire 2 can suppress accumulation of static electricity. In addition, by applying the rubber that has low heat generation properties to the tread 4, the tire 2 can further reduce rolling resistance.

The tire 2 can suppress accumulation of static electricity and can achieve reduction of rolling resistance.

As described above, the wide portion 68 has a groove width wider than the minimum width W1 of the body portion 66. The maximum width W2 of the wide portion 68 is wider than the minimum width W1 of the body portion 66. The portion of the circumferential narrow groove 54 other than the tapered portion 70 has the minimum width W1 in the body portion 66 and has the maximum width W2 in the wide portion 68.

From the viewpoint that the wide portion 68 can effectively contribute to dissipation of heat generated in conducting portion 42, the maximum width W2 of the wide portion 68 is preferably not less than 2 times and more preferably not less than 3 times the minimum width W1 of the body portion 66. From the viewpoint that the influence of the wide portion 68 on the stiffness of the tread 4 is suppressed and the tire 2 can maintain good uneven wear resistance, the maximum width W2 of the wide portion 68 is preferably not greater than 8 times and more preferably not greater than 7 times the minimum width W1 of the body portion 66.

The ratio (HH/HM) of the groove depth HH of the body portion 66 to the groove depth HM of the circumferential narrow groove 54 is preferably not less than 0.30 and not greater than 0.70.

When the ratio (HH/HM) is set to be not less than 0.30, the tire 2 can suppress the influence of the wide portion 68 on the stiffness of the tread 4 and reduce rolling resistance. From this viewpoint, the ratio (HH/HM) is more preferably not less than 0.35.

When the ratio (HH/HM) is set to be not greater than 0.70, the wide portion 68 can effectively contribute to dissipation of heat generated in conducting portion 42. From this viewpoint, the ratio (HH/HM) is more preferably not greater than 0.65.

In FIG. 5, a length indicated by a double-headed arrow HN is the groove depth from the groove opening 54M of the circumferential narrow groove 54 to the maximum width position PN.

From the viewpoint that the wide portion 68 can effectively contribute to dissipation of heat generated in conducting portion 42, the ratio (HN/HM) of the groove depth HN from the groove opening 54M of the circumferential narrow groove 54 to the maximum width position PN to the groove depth HM of the circumferential narrow groove 54 is preferably not less than 0.75 and not greater than 0.95.

As described above, the maximum width W4 of the tubular portion 82 is wider than the groove width W3 of the sipe body 80. From the viewpoint that the tubular portion 82 can effectively contribute to dissipation of heat generated in the conducting portion 42, the ratio (W4/W3) of the maximum width W4 of the tubular portion 82 to the groove width W3 of the sipe body 80 is preferably not less than 4 and more preferably not less than 5. From the viewpoint of being able to suppress the influence of the tubular portion 82 on the stiffness of the tread 4, the ratio (W4/W3) is preferably not greater than 13 and more preferably not greater than 12.

The ratio (DC/DA) of the groove depth DC of the sipe body 80 of the transverse sipe 78 to the groove depth DA of the transverse sipe 78 is preferably not less than 0.35 and not greater than 0.80.

When the ratio (DC/DA) is set to be not less than 0.35, the tire 2 can suppress the influence of the tubular portion 82 on the stiffness of the tread 4 and reduce rolling resistance. From this viewpoint, the ratio (DC/DA) is more preferably not less than 0.40.

When the ratio (DC/DA) is set to be not greater than 0.80, the tubular portion 82 can effectively contribute to dissipation of heat generated in conducting portion 42. From this viewpoint, the ratio (DC/DA) is more preferably not greater than 0.75.

As described above, the tubular portion 82 has a bottom surface including the groove bottom 78T of the transverse sipe 78. In the cross-section shown in FIG. 6, the contour of the bottom surface of the tubular portion 82 is represented by an arc passing through the groove bottom 78T. In FIG. 6, an arrow Rb indicates the radius of this arc.

The radius Rb of the arc representing the contour of the bottom surface of the tubular portion 82 is preferably not less than 1.5 mm and not greater than 3.5 mm.

When the radius Rb is set to be not less than 1.5 mm, occurrence of cracking at the groove bottom 78T is suppressed. From this viewpoint, the radius Rb is more preferably not less than 2.0 mm.

When the radius Rb is set to be not greater than 3.5 mm, a decrease in the stiffness of the main land portion 64 (specifically, main blocks described later) due to the provision of the tubular portion 82 in the transverse sipe 78 is suppressed. From this viewpoint, the radius Rb is more preferably not greater than 3.0 mm.

As shown in FIG. 1, a plurality of lateral grooves 84 are formed on each land portion 48, which is formed in the tread 4, so as to traverse the land portion 48. Accordingly, a plurality of blocks 86 are formed in each land portion 48 so as to be aligned in the circumferential direction. The tread pattern of the tire 2 is a block pattern.

Although not described in detail, each lateral groove 84 has, at a groove opening thereof, a groove width narrower than the groove width WGCs of the shoulder circumferential groove 50. The groove width at the groove opening of the lateral groove 84 is not less than 0.50 times and not greater than 0.80 times the groove width WGCs of the shoulder circumferential groove 50. The lateral groove 84 is shallower than the shoulder circumferential groove 50. The groove depth of the lateral groove 84 is not less than 0.35 times and not greater than 0.65 times the groove depth DGCs of the shoulder circumferential groove 50.

The above-described transverse sipes 78 are formed on the blocks 86 formed by forming the lateral grooves 84 on the main land portions 64. Each main land portion 64 has a plurality of lateral grooves 84 aligned in the circumferential direction. The plurality of lateral grooves 84 demarcate a plurality of blocks 86 in the main land portion 64. Each block 86 has a transverse sipe 78 traversing the block 86.

The tread 4 has the plurality of main land portions 64, and each main land portion 64 has the plurality of lateral grooves 84 connecting the adjacent circumferential grooves 46.

The plurality of lateral grooves 84 formed on each main land portion 64 demarcate the plurality of blocks 86 aligned in the circumferential direction in the main land portion 64. Each of the plurality of blocks 86 has the transverse sipe 78 traversing the block 86.

In the tire 2, a plurality of lateral grooves 84 are also formed on each shoulder land portion 58, and a plurality of blocks 86 are formed therein. In order to be distinguished from the lateral grooves 84 and the blocks 86 in the shoulder land portion 58, the lateral grooves 84 formed on each main land portion 64 are also referred to as main lateral grooves 88, and the blocks 86 formed in this main land portion 64 are also referred as main blocks 90. The blocks 86 formed in the inner main land portion 64u is also referred to as inner main blocks 90u. The blocks 86 formed in each outer main land portion 64s are also referred to as outer main blocks 90s.

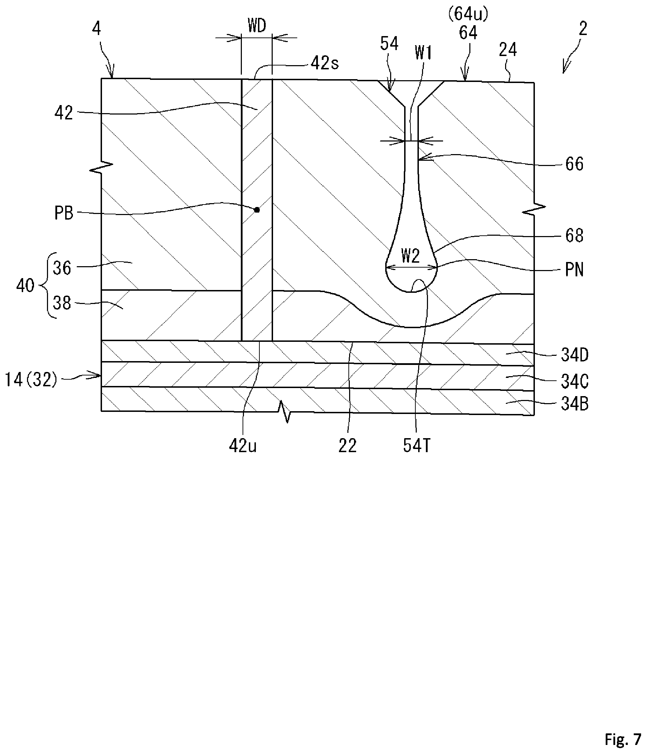

FIG. 7 shows a part of the cross-section of the tire 2 shown in FIG. 3. FIG. 7 shows a part of a tread portion, specifically, a portion where the conducting portion 42 is provided.

In FIG. 7, a length indicated by a double-headed arrow WD is the width of the conducting portion 42. The conducting portion 42 has a width WD which is uniform from the outer end surface 42s to the inner end surface 42u. A maximum width WX and a minimum width WN of the conducting portion 42 shown in FIG. 7 are the same.

A cross-sectional shape of the conducting portion 42 is not limited to a cross-sectional shape shown in FIG. 7.

The width WD of the conducting portion 42 may be configured such that the width WD gradually decreases from the outer end surface 42s toward the inner end surface 42u. In this case, the width WD of the conducting portion 42 indicates the maximum width WX at the outer end surface 42s and indicates the minimum width WN at the inner end surface 42u. The width WD of the conducting portion 42 may be configured such that the width WD gradually increases from the outer end surface 42s toward the inner end surface 42u. In this case, the width WD of the conducting portion 42 indicates the minimum width WN at the outer end surface 42s and indicates the maximum width WX at the inner end surface 42u. The cross-sectional shape of the conducting portion 42 may be formed such that the width WD of the conducting portion 42 indicates the maximum width WX in a center portion and gradually decreases from the center portion toward the outer end surface 42s side or the inner end surface 42u side. In this case, the width WD of the conducting portion 42 indicates the minimum width WN on the outer end surface 42s side or the inner end surface 42u side. The cross-sectional shape of the conducting portion 42 may be formed such that the width WD of the conducting portion 42 indicates the minimum width WN in the center portion and gradually increases from the center portion toward the outer end surface 42s side or the inner end surface 42u side. In this case, the width WD of the conducting portion 42 indicates the maximum width WX on the outer end surface 42s side or the inner end surface 42u side.

It is preferable that the maximum width W2 of the wide portion 68 is wider than the maximum width WX of the conducting portion 42. Accordingly, the wide portion 68 can effectively contribute to dissipation of heat generated in the conducting portion 42. The dissipation of heat generated in the conducting portion 42 is promoted. The tire 2 can effectively suppress a decrease in durability due to heat generation of the conducting portion 42. From this viewpoint, the maximum width W2 of the wide portion 68 is more preferably not less than 2.0 times the maximum width WX of the conducting portion 42. From the viewpoint of being able to suppress a decrease in stiffness due to the wide portion 68 and maintain low rolling resistance, the maximum width W2 of the wide portion 68 is more preferably not greater than 8.0 times the maximum width WX of the conducting portion 42.

It is preferable that the maximum width W4 of the tubular portion 82 is wider than the minimum width WN of the conducting portion 42. Accordingly, the tubular portion 82 can effectively contribute to dissipation of heat generated in the conducting portion 42. The dissipation of heat generated in the conducting portion 42 is promoted. The tire 2 can effectively suppress a decrease in durability due to heat generation of the conducting portion 42. From this viewpoint, the maximum width W4 of the tubular portion 82 is more preferably not less than 1.5 times the minimum width WN of the conducting portion 42. From the viewpoint of being able to suppress a decrease in stiffness due to the tubular portion 82 and maintain low rolling resistance, the maximum width W4 of the tubular portion 82 is more preferably not greater than 4.0 times the minimum width WN of the conducting portion 42.

The land ratio of the tire 2 is preferably not less than 75%. Accordingly, the main land portions 64 easily support each other, so that the stiffness of the tread 4 is effectively increased. The tire 2 can effectively reduce rolling resistance and can also improve wear resistance. From this viewpoint, the land ratio is more preferably not less than 80%. From the viewpoint that each circumferential narrow groove 54 effectively promotes heat dissipation and a decrease in durability due to heat generation of the conducting portion 42 is effectively suppressed, the land ratio is preferably not greater than 90%.

In FIG. 7, a position indicated by reference character PB represents the radial center of the conducting portion 42. As shown in FIG. 7, the groove bottom 54T of the circumferential narrow groove 54 is located radially inward of the radial center PB of the conducting portion 42. Accordingly, the wide portion 68 of the circumferential narrow groove 54 can effectively contribute to dissipation of heat generated in the conducting portion 42. The dissipation of heat generated in the conducting portion 42 is promoted. The tire 2 can effectively suppress a decrease in durability due to heat generation of the conducting portion 42. From this viewpoint, it is preferable that the groove bottom 54T of the circumferential narrow groove 54 is located radially inward of the radial center PB of the conducting portion 42. In this case, it is more preferable that the maximum width position PN of the wide portion 68 is located radially inward of the radial center PB of the conducting portion 42.

In the tire 2, it is preferable that the groove bottom 78T of the transverse sipe 78 is located radially inward of the radial center PB of the conducting portion 42. Accordingly, the tubular portion 82 of the transverse sipe 78 can effectively contribute to dissipation of heat generated in the conducting portion 42. The dissipation of heat generated in the conducting portion 42 is promoted. The tire 2 can effectively suppress a decrease in durability due to heat generation of the conducting portion 42. From this viewpoint, it is more preferable that the maximum width position PT of the tubular portion 82 is located radially inward of the radial center PB of the conducting portion 42.

As described above, the center land portion 60 has the conducting portion 42. In the tire 2, the center land portion 60 is the inner main land portion 64u. That is, the inner main land portion 64u has the conducting portion 42. The circumferential narrow grooves 54 are located on both sides of the inner main land portion 64u. Deformation of the inner main land portion 64u when the tread 4 comes into contact with a road surface and becomes deformed is effectively suppressed. Furthermore, the wide portion 68 of each circumferential narrow groove 54 can effectively contribute to dissipation of heat generated in the conducting portion 42. In the tire 2, a decrease in durability due to heat generation of the conducting portion 42 is effectively suppressed. Moreover, the suppression of the deformation of the inner main land portion 64u can also contribute to reduction of rolling resistance. The tire 2 can reduce rolling resistance while suppressing a decrease in durability due to heat generation of the conducting portion 42. From this viewpoint, it is preferable that the main land portion 64 having the conducting portion 42 is the inner main land portion 64u.

The inner main land portion 64u having the conducting portion 42 of the tire 2 is the center land portion 60. As described above, the center land portion 60 is located on the equator plane EL. The alternate long and short dash line EL representing the equator plane is at the axial center of the center land portion 60.

As shown in FIG. 2, the conducting portion 42 is not on the equator plane EL, but is located between the equator plane EL and the circumferential narrow groove 54 on the second axial direction side, that is, on the second end TE2 side of the tread surface 24. The conducting portion 42 is placed in the inner main land portion 64u so as to be offset from the axial center of the inner main land portion 64u. Accordingly, the conducting portion 42 is located at a position close to the circumferential narrow groove 54 on the second end TE2 side of the tread surface 24. In the tire 2, heat generated in the conducting portion 42 is effectively dissipated through the circumferential narrow groove 54. The tire 2 can more effectively suppress a decrease in durability due to heat generation of the conducting portion 42. From this viewpoint, in the case where the main land portion 64 having the conducting portion 42 is the inner main land portion 64u, it is preferable that the conducting portion 42 is placed in the inner main land portion 64u so as to be offset from the axial center of the inner main land portion 64u. From the viewpoint of being able to increase the frequency with which the conducting portion 42 comes into contact with a road surface and to effectively suppress accumulation of static electricity, it is more preferable that the axial center of the inner main land portion 64u having the conducting portion 42 coincides with the equator plane EL.

As shown in FIG. 5, the groove width of the circumferential narrow groove 54 gradually widens from the body portion 66 to the maximum width position PN of the wide portion 68. As shown in FIG. 6, in the transverse sipe 78, the difference between the groove width of the sipe body 80 and the groove width of the tubular portion 82 is large.

The change in stiffness when the exposed portion of the circumferential narrow groove 54 changes from the body portion 66 to the wide portion 68 is smaller than the change in stiffness when the exposed portion of the transverse sipe 78 changes from the sipe body 80 to the tubular portion 82. From the viewpoint of being able to effectively suppress a rapid change in stiffness due to wear, it is preferable that the groove depth HH of the body portion 66 is shallower than the groove depth DC of the sipe body 80. Specifically, the ratio (HH/DC) of the groove depth HH of the body portion 66 to the groove depth DC of the sipe body 80 is preferably not less than 0.50 and not greater than 0.95 and more preferably not less than 0.60 and not greater than 0.90.

The ratio (DC/HM) of the groove depth DC of the sipe body 80 of the transverse sipe 78 to the groove depth HM of the circumferential narrow groove 54 is preferably not less than 0.60 and not greater than 0.80. Accordingly, the tubular portion 82 of the transverse sipe 78 and the wide portion 68 of the circumferential narrow groove 54 can effectively contribute to dissipation of heat generated in the conducting portion 42. In the tire 2, a decrease in durability due to heat generation of the conducting portion 42 is effectively suppressed. From this viewpoint, the ratio (DC/HM) is more preferably not less than 0.65 and not greater than 0.75.

As shown in FIG. 2, each circumferential narrow groove 54 extends in the circumferential direction while meandering rather than extending straight. In particular, each circumferential narrow groove 54 of the tire 2 includes first narrow grooves 92 closer to the first end TE1 of the tread surface 24, second narrow grooves 94 closer to the second end TE2 of the tread surface 24, and connection narrow grooves 96 connecting the first narrow grooves 92 and the second narrow grooves 94.

Among the connection narrow grooves 96, the connection narrow grooves 96 connecting the first narrow grooves 92 located on the leading edge side and the second narrow grooves 94 located on the trailing edge side are also referred to as first connection narrow grooves 96a. The connection narrow grooves 96 connecting the second narrow grooves 94 located on the leading edge side and the first narrow grooves 92 located on the trailing edge side are also referred to as second connection narrow grooves 96b.

When a unit configured by connecting the first narrow groove 92, the first connection narrow groove 96a, the second narrow groove 94, and the second connection narrow groove 96b in this order is defined as a groove unit, the circumferential narrow groove 54 is formed by connecting a plurality of such groove units in the circumferential direction. The first narrow grooves 92 and the second narrow grooves 94 are arranged alternately in the circumferential direction.

When the tread surface 24 comes into contact with a road surface and the tread 4 becomes deformed, the opposing groove walls 54W of the circumferential narrow groove 54 come into contact with each other at the body portion main body 72. Since the circumferential narrow groove 54 extends in the circumferential direction while meandering, the groove walls 54W effectively engage each other. The main land portions 64 located on both sides of the circumferential narrow groove 54 restrain each other. The apparent stiffness of the main land portions 64 is increased. Deformation of the main land portions 64 is effectively suppressed. The tire 2 can effectively reduce rolling resistance and also improve wear resistance. From this viewpoint, it is preferable that the circumferential narrow groove 54 includes the first narrow grooves 92, the second narrow grooves 94, and the connection narrow grooves 96 connecting the first narrow grooves 92 and the second narrow grooves 94, and the first narrow grooves 92 and the second narrow grooves 94 are arranged alternately in the circumferential direction.

The tire 2 has the pair of center circumferential grooves 52 located with the equator plane EL interposed therebetween, that is, a first center circumferential groove 521 and a second center circumferential groove 522.

As described above, the center circumferential grooves 52 of the tire 2 are the circumferential narrow grooves 54.

The first center circumferential groove 521 is a first circumferential narrow groove 541, and the second center circumferential groove 522 is a second circumferential narrow groove 542.

The first narrow grooves 92 and the second narrow grooves 94 of each circumferential narrow groove 54 extend in the circumferential direction. The first narrow grooves 92 and the second narrow grooves 94 have a constant length in the circumferential direction.

Each second narrow groove 94 of the second circumferential narrow groove 542 has the same length as the length of each first narrow groove 92 of the first circumferential narrow groove 541, and each first narrow groove 92 of the second circumferential narrow groove 542 has the same length as the length of each second narrow groove 94 of the first circumferential narrow groove 541.

The first narrow grooves 92 of the first circumferential narrow groove 541 and the second narrow grooves 94 of the second circumferential narrow groove 542 are located on the end TE side of the tread surface 24, and the second narrow grooves 94 of the first circumferential narrow groove 541 and the first narrow grooves 92 of the second circumferential narrow groove 542 are located on the equator plane EL side.

Hereinafter, for convenience of description, the second narrow grooves 94 of the first circumferential narrow groove 541 and the first narrow grooves 92 of the second circumferential narrow groove 542 are referred to as inner narrow grooves 98, and the first narrow grooves 92 of the first circumferential narrow groove 541 and the second narrow grooves 94 of the second circumferential narrow groove 542 are referred to as outer narrow grooves 100.

The first connection narrow grooves 96a of the first circumferential narrow groove 541 and the second connection narrow grooves 96b of the second circumferential narrow groove 542 are referred to as outer connection narrow grooves 102. The outer connection narrow grooves 102 connect the outer narrow grooves 100 on the leading edge side and the inner narrow grooves 98 on the trailing edge side. The second connection narrow grooves 96b of the first circumferential narrow groove 541 and the first connection narrow grooves 96a of the second circumferential narrow groove 542 are referred to as inner connection narrow grooves 104. The inner connection narrow grooves 104 connect the inner narrow grooves 98 on the leading edge side and the outer narrow grooves 100 on the trailing edge side.

The inner narrow grooves 98 of the first circumferential narrow groove 541 (hereinafter referred to as first inner narrow grooves 981) are located on the trailing edge side with respect to the inner narrow grooves 98 of the second circumferential narrow groove 542 (hereinafter referred to as second inner narrow grooves 982), but parts of the first inner narrow grooves 981 and the second inner narrow grooves 982 overlap each other in the axial direction.

The outer narrow grooves 100 of the first circumferential narrow groove 541 (hereinafter referred to as first outer narrow grooves 1001) are located on the trailing edge side with respect to the outer narrow grooves 100 of the second circumferential narrow groove 542 (hereinafter referred to as second outer narrow grooves 1002), but parts of the first outer narrow grooves 1001 and the second outer narrow grooves 1002 overlap each other in the axial direction.

In FIG. 1, a length indicated by a double-headed arrow LS is the length in the circumferential direction of the inner narrow groove 98. A length indicated by a double-headed arrow LL is the length in the circumferential direction of the outer narrow groove 100. In the tire 2, each outer narrow groove 100 is longer than each inner narrow groove 98. Specifically, the length LL in the circumferential direction of the outer narrow groove 100 is preferably not less than 1.1 times and not greater than 1.5 times the length LS in the circumferential direction of the inner narrow groove 98.

The first circumferential narrow groove 541 and the second circumferential narrow groove 542 are closer to each other at portions where the first inner narrow grooves 981 and the second inner narrow grooves 982 face each other, and are farther apart from each other at portions where the first outer narrow grooves 1001 and the second outer narrow grooves 1002 face each other.

The distance in the axial direction between the first circumferential narrow groove 541 and the second circumferential narrow groove 542 varies in the circumferential direction. This distance in the axial direction is shorter between the first inner narrow grooves 981 and the second inner narrow grooves 982, and is longer between the first outer narrow grooves 1001 and the second outer narrow grooves 1002.

The main lateral grooves 88 formed on the inner main land portion 64u (hereinafter referred to as inner main lateral grooves 88u) connect the first inner narrow grooves 981 and the second inner narrow grooves 982 between which the above-described distance in the axial direction is shorter. The inner main lateral grooves 88u are located at portions where the adjacent circumferential narrow grooves 54 are closer to each other.

As described above, the first outer narrow grooves 1001 are located on the trailing edge side with respect to the second outer narrow grooves 1002. The end of each inner main lateral groove 88u located on the first end TE1 side of the tread surface 24 is located on the trailing edge side with respect to the end of this inner main lateral groove 88u located on the second end TE2 side. In other words, the inner main lateral grooves 88u are inclined with respect to the axial direction.

Each inner main block 90u formed between the first circumferential narrow groove 541 and the second circumferential narrow groove 542 is located between the inner main lateral groove 88u on the leading edge side and the inner main lateral groove 88u on the trailing edge side in the circumferential direction, and is located between the first outer narrow groove 1001 and the second outer narrow groove 1002 in the axial direction. Furthermore, each outer narrow groove 100 is longer than each inner narrow groove 98, and the distance in the axial direction between each first outer narrow groove 1001 and each second outer narrow groove 1002 is longer than the distance in the axial direction between each first inner narrow groove 981 and each second inner narrow groove 982.

Each inner main block 90u formed between the adjacent circumferential narrow grooves 54 is surrounded by the two inner main lateral grooves 88u located at the portion where the adjacent circumferential narrow grooves 54 are closer to each other and the two outer narrow grooves 100 each of which is one element of the circumferential narrow groove 54. This inner main block 90u has an octagonal-like shape. The tire 2 can suppress an increase in ground-contact pressure at the edge of the inner main block 90u. Each circumferential narrow groove 54 can sufficiently exhibit its function. From this viewpoint, it is preferable that each inner main lateral groove 88u extending between the adjacent circumferential narrow grooves 54 is located at the portion where the adjacent circumferential narrow grooves 54 are closer to each other.

As the inner peaks 50u of each shoulder circumferential groove 50 as the circumferential wide groove 56, there are first inner peaks 50uu overlapping the inner narrow grooves 98 of the circumferential narrow groove 54 in the axial direction, and there are second inner peaks 50us overlapping the outer narrow grooves 100 of the circumferential narrow groove 54 in the axial direction. The first inner peaks 50uu and the second inner peaks 50us are arranged alternately in the circumferential direction with the outer peaks 50s interposed therebetween.

As the outer peaks 50s of each shoulder circumferential groove 50, there are first outer peaks 50sa overlapping the lateral grooves 84 formed on the shoulder land portion 58 (hereinafter referred to as shoulder lateral grooves 84s), and there are second outer peaks 50sb overlapping the blocks 86 formed in the shoulder land portion 58 (hereinafter referred to as shoulder blocks 86s). The first outer peaks 50sa and the second outer peaks 50sb are arranged alternately in the circumferential direction with the inner peaks 50u interposed therebetween.

While each circumferential narrow groove 54 oscillates once, each shoulder circumferential groove 50, that is, each circumferential wide groove 56, oscillates twice. When the tire 2 runs on a wet road surface, water easily flows in each circumferential wide groove 56. The circumferential wide groove 56 can contribute to improving wet performance.

The distance in the axial direction between each circumferential wide groove 56 and each circumferential narrow groove 54 varies in the circumferential direction. This distance in the axial direction is shorter between the second inner peaks 50us and the outer narrow grooves 100, and is longer between the first outer peaks 50sa and the inner narrow grooves 98, in the circumferential wide groove 56 on the first end TE1 side of the tread surface 24. This distance in the axial direction is shorter between the second inner peaks 50us and the outer narrow grooves 100, and is longer between the second outer peaks 50sb and the inner narrow grooves 98, in the circumferential wide groove 56 on the second end TE2 side of the tread surface 24.

The main lateral grooves 88 formed on each outer main land portion 64s (hereinafter referred to as outer main lateral grooves 88s) connect the second inner peaks 50us and the outer narrow grooves 100 of the circumferential wide groove 56 between which the above-described distance in the axial direction is shorter. Each outer main lateral groove 88s is located at the portion where the circumferential wide groove 56 and the circumferential narrow groove 54 are closer to each other.

As shown in FIG. 2, in each outer main land portion 64s, the outer main lateral grooves 88s are inclined with respect to the axial direction. The axially inner end of each outer main lateral groove 88s is located on the leading edge side with respect to the axially outer end thereof. When the tire 2 runs, the axially inner end of each outer main lateral groove 88s comes into contact with a road surface earlier than the axially outer end thereof. Each outer main lateral groove 88s extends axially outward from the axially inner end thereof. When the tire 2 runs on a wet road surface, the outer main lateral grooves 88s can effectively drain water existing between the tire 2 and the road surface, from a ground-contact surface. The tire 2 can improve wet performance. From this viewpoint, it is preferable that, in each outer main land portion 64s, the outer main lateral grooves 88s are inclined with respect to the axial direction, and the axially inner end of each outer main lateral groove 88s comes into contact with a road surface earlier than the axially outer end thereof.

As is obvious from the above description, according to the present invention, a heavy duty tire that can suppress accumulation of static electricity and can achieve reduction of rolling resistance, is obtained.

The above-described technology capable of suppressing accumulation of static electricity and achieving reduction of rolling resistance can be applied to various tires.

## Claims

1. A heavy duty tire (2) comprising:
a pair of beads (10);
a carcass (12) extending on and between the pair of beads (10);
a reinforcing layer (14) located radially outward of the carcass (12); and
a tread (4) having an outer circumferential surface (20) configured to come into contact with a road surface, and an inner circumferential surface (22) in contact with the reinforcing layer (14), wherein
the tread (4) has a plurality of circumferential grooves (46) extending continuously in a circumferential direction,
the plurality of circumferential grooves (46) demarcate a plurality of land portions (48) in the tread (4),
the plurality of land portions (48) include a plurality of main land portions (64) each located between the adjacent circumferential grooves (46),
the circumferential groove (46) located between the adjacent main land portions (64) is a circumferential narrow groove (54),
the circumferential narrow groove (54) includes a body portion (66) and a wide portion (68) located radially inward of the body portion (66),
a maximum width W2 of the wide portion (68) is wider than a minimum width W1 of the body portion (66),
a pair of groove walls (54W) of the circumferential narrow groove (54) come into contact with each other at the body portion (66) when the tread (4) comes into contact with a road surface and becomes deformed,
each of the plurality of main land portions (64) has a transverse sipe (78) traversing the main land portion (64),
the transverse sipe (78) includes a sipe body (80) and a tubular portion (82) located radially inward of the sipe body (80),
a maximum width W4 of the tubular portion (82) is wider than a groove width W3 of the sipe body (80),
the tread (4) includes a conducting portion (42) connecting the outer circumferential surface (20) and the inner circumferential surface (22), and
one of the main land portions (64) includes the conducting portion (42).

2. The heavy duty tire (2) according to claim 1, wherein the maximum width W2 of the wide portion (68) is wider than a maximum width WX of the conducting portion (42).

3. The heavy duty tire (2) according to claim 1 or 2, wherein the maximum width W4 of the tubular portion (82) is wider than a minimum width WN of the conducting portion (42).

4. The heavy duty tire (2) according to any one of claims 1 to 3, wherein a land ratio defined below is not less than 75%,
land ratio: a ratio of a total area value of ground-contact surfaces of a plurality of the land portions (48) included in a ground-contact surface obtained when the tire (2) that is fitted on a standardized rim (R) and whose internal pressure is adjusted to a standardized internal pressure is brought into contact with a flat road surface with a camber angle being set to 0 degrees and with a load, which is 100% of a standardized load, being applied to the tire (2), to an area value of an entirety of the ground-contact surface.

5. The heavy duty tire (2) according to any one of claims 1 to 4, wherein a groove bottom (54T) of the circumferential narrow groove (54) is located radially inward of a radial center (PB) of the conducting portion (42).

6. The heavy duty tire (2) according to any one of claims 1 to 5, wherein a groove bottom of the transverse sipe (78) is located radially inward of a radial center (PB) of the conducting portion (42).

7. The heavy duty tire (2) according to any one of claims 1 to 6, wherein
the circumferential grooves (46) include a plurality of the circumferential narrow grooves (54, 541, 542),
the main land portion (64) located between the adjacent circumferential narrow grooves (54, 541, 542) is an inner main land portion (64u), and
the main land portion (64) having the conducting portion (42) is the inner main land portion (64u).

8. The heavy duty tire (2) according to claim 7, wherein the conducting portion (42) is placed in the inner main land portion (64u) so as to be offset from an axial center of the inner main land portion (64u).

9. The heavy duty tire (2) according to claim 7 or 8, wherein an axial center of the inner main land portion (64u) coincides with a tire equator plane (EL).
